# EUROPEAN PATENT SPECIFICATION

(11) **EP 2 549 203 B1**
(45) Date of publication and mention of the grant of the patent: **08.04.2020**
(21) Application number: 12176180.3
(22) Date of filing: 12.07.2012
(51) Int. Cl.: F25B 13/00, F25B 40/00, F25B 40/02

(54) **Multi-Type Air Conditioner**
Multityp-Klimaanlage
Climatiseur à plusieurs types

(30) Priority: 18.07.2011 KR 20110071185
(43) Date of publication of application: 23.01.2013
(73) Proprietor: Samsung Electronics Co., Ltd., Suwon-si, Gyeonggi-do 16677 (KR)
(72) Inventor: Lee, Suk Ho, Gyeonggi-do (KR); Chang, Min, Gyeonggi-do (KR)
(74) Representative: Walaski, Jan Filip

(56) References cited:
- WO-A1-2008/114952
- WO-A1-2010/082325
- US-A1- 2006 137 381

## Description

The invention relates to a multi-type air conditioner capable of simultaneously performing a cooling operation and a heating operation.

In general, a multi-type air conditioner may include an outdoor unit and a plurality of indoor units connected to the outdoor unit. A refrigerant transferred from the outdoor unit is distributed to the plurality of indoor units such that a cooling operation and a heating operation are independently performed at each indoor space.

The outdoor unit may include a compressor to compress a refrigerant, an outdoor heat exchanger to exchange heat with outdoor air, an outdoor expansion valve to expand the refrigerant under decompression before the refrigerant is introduced into the outdoor heat exchanger during a heating operation, and a four-way valve to guide the refrigerant discharged to one of the plurality of indoor units and the outdoor heat exchanger. Each one of the plurality of indoor units may include an indoor heat exchanger to exchange heat with indoor air, and an indoor expansion valve to expand the refrigerant under decompression before the refrigerant is introduced into the indoor heat exchanger during a cooling operation. Such a configuration of the multi-type air conditioner enables the cooling operation and the heating operation to be selectively converted.

In a multi-type air conditioner which is provided with a conversion unit, the conversion unit may be provided between the outdoor unit and the indoor unit to deliver the refrigerant from the outdoor unit to the indoor unit or from the indoor unit to the outdoor unit such that an indoor unit performs a cooling operation while another indoor unit performs a heating operation.

In addition, the multi-type air conditioner may include a plurality of subcooling units which are each configured to subcool the refrigerant introduced to the indoor heat exchanger during a cooling operation, thereby reducing noise generated in the course of passing refrigerant through the indoor expansion valve.

Therefore, it is an aspect of the present disclosure to provide a multi-type air conditioner capable of preventing a refrigerant passing through a subcooling unit from failing to be overheated into a state of pure gas after a heat exchange with refrigerant being delivered to the indoor unit, while ensuring a desired subcooling degree that is suitable for each indoor unit using refrigerant which is delivered to an indoor heat exchanger after the heat exchange with the refrigerant passing through the subcooling unit.

US 2006/137381, WO 2010/082325 and WO 2008/114952 each disclose an air conditioner.

Additional aspects of the disclosure will be set forth in part in the description which follows and, in part, will be obvious from the description, or may be learned by practice of the disclosure.

According to aspects of the present invention, there is provided a multi-type air conditioner according to claim 1 and a method of controlling refrigerant circulation during a cooling operation in a multi-type air conditioner according to claim 3.

Preferred embodiments are defined in the dependent claims.

The second refrigerant pipe is configured to guide a refrigerant, which has absorbed heat at the indoor heat exchanger, to the compressor during a cooling operation. The third refrigerant pipe is configured to guide a refrigerant, which has emitted heat in at least one of the outdoor heat exchanger and the indoor heat exchangers, to another one of the outdoor heat exchanger and the indoor heat exchangers. The subcooling refrigerant pipe branches from the third refrigerant pipe and sequentially passes through at least one of the plurality of subcooling units and joins the second refrigerant pipe.

The multi-type air conditioner further includes a plurality of first branch refrigerant pipes connected to the third refrigerant pipe, which during the cooling operation, distributes the refrigerant, which is delivered through the third refrigerant pipe, into the plurality of indoor heat exchangers. The subcooling unit is configured to allow a refrigerant, which passes through the first branch refrigerant pipe, to exchange heat with a refrigerant, which passes through the subcooling refrigerant pipe.

The mode conversion unit further includes a cooling valve and a heating valve. The cooling valve, during a cooling operation, is configured to allow a refrigerant, which has passed through the indoor heat exchanger, to be delivered to the second refrigerant pipe. The heating valve, during a heating operation, is configured to allow a refrigerant, which has passed through the first refrigerant pipe, to be delivered to the indoor heat exchanger.

The multi-type air conditioner further includes a four-way valve, a fourth refrigerant pipe, a heating bypass refrigerant pipe and a heating bypass valve. The four-way valve is configured to guide a refrigerant, which has been discharged from the compressor, to one of the outdoor heat exchanger and the plurality of indoor units. The fourth refrigerant pipe connects the four-way valve to the outdoor heat exchanger. The heating bypass refrigerant pipe connects the first refrigerant pipe to the fourth refrigerant pipe. The heating bypass valve is configured to open and close the heating bypass refrigerant pipe as needed.

The outdoor expansion valve is disposed on the outdoor unit, and during a heating operation, expands a refrigerant under decompression before the refrigerant is introduced into the outdoor heat exchanger. The indoor expansion valve is disposed on each of the indoor units, and during a cooling operation, expands a refrigerant under decompression before the refrigerant is introduced into the indoor heat exchanger.

The subcooling refrigerant pipe sequentially passes through at least one of the plurality of subcooling units, so that a refrigerant moving along the subcooling refrigerant pipe proceeds past a subcooling unit corresponding to the an indoor unit at a non-operation state (e.g., an indoor unit not engaged in a cooling operation) and then is used to absorb heat at the next subcooling unit which is in an operating state (e.g., an indoor unit engaged in a cooling operation). Accordingly, the refrigerant passing through the subcooling units is prevented from failing to be overheated into a state of pure gas while ensuring a desired subcooling degree or temperature that is suitable for each indoor unit.

These and/or other aspects of the disclosure will become apparent and more readily appreciated from the following description of the embodiments, taken in conjunction with the accompanying drawings of which:
FIG. 1 is a schematic view illustrating the configuration of a multi-type air conditioner according to the invention.
FIG. 2 is a pressure - enthalpy (P-h) thermodynamic line diagram of the multi-type air conditioner according to the embodiment of the present invention.

Reference will now be made in detail to the embodiments of the present disclosure, examples of which are illustrated in the accompanying drawings, wherein like reference numerals refer to like elements throughout.

A multi-type air conditioner according to an embodiment of the present disclosure includes an outdoor unit 10 disposed at an exterior space, a plurality of indoor units 20 disposed in a plurality of interior spaces, respectively, to independently heat and cool the interior spaces, and a mode conversion unit 30 disposed between the outdoor unit 10 and the plurality of indoor units 20 and connected to the outdoor unit 10 and the plurality of indoor units 20 through refrigerant pipes to selectively deliver a refrigerant, which is delivered from one of the outdoor unit 10 and the plurality of indoor units 20, to another one of the outdoor unit 10 and the plurality of indoor units 20 such that a cooling operation or a heating operation is selectively performed on the plurality of indoor units 20.

The outdoor unit 10 may include compressors 11A and 11B to compress a refrigerant, an outdoor heat exchanger 12 to exchange a heat with outdoor air, and a four-way valve 13 to selectively guide the refrigerant, which is discharged from the compressors 11A and 11B, to one of the outdoor unit 10 and the plurality of indoor units 20. The outdoor unit 10 may further include an outdoor expansion valve 14 to expand the refrigerant which is guided to the outdoor heat exchanger 12 under decompression during a heating operation. The outdoor unit 10 may further include an accumulator 15 to prevent the refrigerant in a state of liquid from being introduced to the compressors 11A and 11B, by capturing and removing any liquid which may remain in the refrigerant. Each of the indoor units 20 includes an indoor heat exchanger 21 to exchange heat with indoor air and an indoor expansion valve 22 to expand the refrigerant, which is introduced to the indoor heat exchanger 21, under decompression during a cooling operation. A fan or blower (not shown) may be disposed in each of the indoor units to circulate warm air in the corresponding indoor unit across the indoor heat exchanger 21 in which the refrigerant passes through during a cooling operation, such that the warm air evaporates the liquid part of the refrigerant.

The compressors 11A and 11B include a pair of compressors 11A and 11B that are connected in parallel to each other to flexibly correspond to a cooling load and a heating load required for a cooling operation and a heating operation. Each of the outdoor expansion valve 14 and the indoor expansion valve 22 is implemented by an electronic expansion valve that adjusts an opening degree such that the refrigerant, which passes through the outdoor expansion valve 14 and the indoor expansion valve 22, are selectively expanded under decompression.

The respective components are connected to each other through the refrigerant pipes to circulate the refrigerant. The refrigerant pipes include a first refrigerant pipe P1, a second refrigerant pipe P2, a third refrigerant pipe P3, a fourth refrigerant pipe P4, and a fifth refrigerant pipe P5. The first refrigerant pipe P1 connects the four-way valve 13 to the indoor heat exchangers 21 to deliver the refrigerant of high temperature discharged from the compressors 11A and 11B to the indoor heat exchangers 21. The second refrigerant pipe P2 connects the indoor heat exchangers 21 to the compressors 11A and 11B such that the refrigerant, which has absorbed heat at the indoor heat exchanger 12, is guided to the compressors 11A and 11B during the cooling operation. The third refrigerant pipe P3 connects the outdoor heat exchanger 12 to the indoor heat exchangers 21 such that the refrigerant, which has emitted heat at one heat exchanger of the outdoor heat exchanger 12 and the indoor heat exchangers 21, is guided to another one of the outdoor heat exchanger 12 and the indoor heat exchangers 21. The fourth refrigerant pipe P4 connects the four-way valve 13 to the outdoor heat exchanger 12 to deliver a refrigerant of high temperature to the outdoor heat exchanger 12. The fifth refrigerant pipe P5 connects the four-way valve 13 to the second refrigerant pipe P2 such that the refrigerant, which has been delivered from the outdoor heat exchanger 12 through the four-way valve 13, is guided to the compressors 11A and 11B through the second refrigerant pipe P2.

In addition, a heating bypass refrigerant pipe P6 may be provided between the first refrigerant pipe P1 and the fourth refrigerant pipe P4 to connect the first refrigerant pipe P1 to the fourth refrigerant pipe P4. Accordingly, if a heating operation is performed with a heating load smaller than a cooling load, a part of the refrigerant, which is to be delivered to the outdoor heat exchanger 12 through the fourth refrigerant pipe P4, is delivered to a certain indoor heat exchanger 21 through the first refrigerant pipe P1 such that a heating operation is performed on the certain indoor heat exchanger 21. A heating bypass valve 16 may be disposed on the heating bypass refrigerant pipe P6 to selectively open and close the heating bypass refrigerant pipe P6 according to the determination regarding whether the heating load is smaller than the cooling load during the heating operation.

The outdoor expansion valve 14 is disposed on the third refrigerant pipe P3. The refrigerant pipes include a cooling bypass refrigerant pipe P7 that allows the refrigerant to detour around the outdoor expansion valve 14 during a cooling operation. A cooling bypass valve 17 is disposed on the cooling bypass refrigerant pipe P7 to selectively open and close the cooling bypass refrigerant pipe P7.

The mode conversion unit 30 may include a plurality of cooling refrigerant pipes P8, a plurality of heating refrigerant pipes P9, cooling valves 31, and heating valves 32. The plurality of cooling refrigerant pipes P8 connect the second refrigerant pipe P2 to the plurality of indoor heat exchangers 21 such that a refrigerant passing through the indoor heat exchanger 21 is delivered to the compressors 11A and 11B through the second refrigerant pipe P2 during a cooling operation. The plurality of heating refrigerant pipes P9 connect the first refrigerant pipe P1 to the plurality of indoor heat exchangers 21 such that the refrigerant delivered from the compressors 11A and 11B is delivered to the indoor heat exchanger 21 through the first refrigerant pipe P1 during a heating operation. The cooling valves 31 are disposed on the cooling refrigerant pipes P8, respectively, such that a cooling operation is selectively performed at a certain indoor unit 21 corresponding to a respective cooling refrigerant pipe P8. The heating valves 32 are disposed on the heating refrigerant pipes P9, respectively such that a heating operation is selectively performed at a certain indoor unit 21 corresponding to a respective heating refrigerant pipe P9. One of the cooling valves 31 and one of the heating valves 32 are connected to one of the indoor units 20 while forming a pair of values in a manner such that a plurality of pairs of valves are provided to correspond to the plurality of indoor units 20. For example, when eight pairs of valves are provided (including eight cooling valves 31 and eight heating valves 32), then eight indoor units 20 correspond to the eight pairs of valves.

In addition, the refrigerant pipes include a plurality of first branch refrigerant pipes P10 and a plurality of second branch refrigerant pipes P11. The plurality of first branch refrigerant pipes P10 branch from the third refrigerant pipe P3 such that a refrigerant is distributed into the plurality of indoor heat exchangers 21 during a cooling operation. The plurality of second branch refrigerant pipes P11 enable the indoor heat exchangers 21 each to be connected to one cooing refrigerant pipe P8 and one heating refrigerant pipe P9. The indoor expansion valve 22 is disposed on the first branch refrigerant pipe P10.

The mode conversion unit 30 includes a subcooling unit 33, during a cooling operation, configured to subcool the refrigerant, which is delivered from the outdoor heat exchanger 12, before the refrigerant is introduced into the indoor unit 20, thereby preventing a refrigerant in a state of gas from being introduced into the indoor expansion valve 22.

The subcooling unit 33 is provided with a plurality of subcooling units 33 to subcool the refrigerant introduced to the respective indoor unit 20. The subcooling unit 33 is configured to subcool the refrigerant passing through the first branch refrigerant pipes P10. The mode conversion unit 30 includes a subcooling refrigerant pipe P12 and a super cooling expansion valve 34. In order to subcool a refrigerant passing through the first branch refrigerant pipe P10 at the subcooling unit 33, the subcooling refrigerant pipe P12 branches from the third refrigerant pipe and joins the second refrigerant pipe P2 after passing through the subcooling unit 33. The subcooling expansion valve 34 is disposed on the subcooling refrigerant pipe P12 to expand the refrigerant under decompression before the refrigerant is introduced into the super cooling unit 33. That is, the first branch refrigerant pipe P10 exchanges heat with the subcooling refrigerant pipe P12 at the subcooling unit 33 such that a refrigerant passing through the first branch refrigerant pipe P10 is subcooled by a refrigerant passing through the subcooling refrigerant pipe P12, and a refrigerant passing through the subcooling refrigerant pipe P12 is heated by a refrigerant passing through the first branch refrigerant pipe P10.

Accordingly, the refrigerant delivered from the outdoor heat exchanger 12 is expanded under a decompression by passing through the subcooling expansion valve 34.

Thereafter, the refrigerant expanded under the decompression absorbs heat from the refrigerant passing through the first branch refrigerant pipe P10 while passing through the super cooling unit 33 along the super cooling refrigerant pipe P12. Accordingly, a refrigerant passing through the first branch refrigerant pipe P10 is subcooled by passing through the subcooling unit 33, before the refrigerant is introduced into the indoor expansion valve 22 of the indoor unit 20.

According to the embodiment of the present disclosure, the subcooling refrigerant pipe P12 sequentially passes through the plurality of subcooling units 33 to subcool each refrigerant introduced into the indoor units 20. In a state that the subcooling refrigerant pipe P12 sequentially passes through the subcooling units 33, if a certain indoor unit 20 does not operate, or is not performing a cooling operation, a heat exchange is not performed at a certain subcooling unit 33 corresponding to the certain indoor unit 20, and the refrigerant is directly delivered to the next subcooling unit 33 along the subcooling refrigerant pipe P12 and is used for absorbing heat of the refrigerant passing through the first branch refrigerant pipe P10 at the next subcooling unit 33. In this manner, a refrigerant is not provided for absorbing heat at a certain subcooling unit 33 corresponding to the indoor unit 20 that has stopped operating, or is not performing a cooling operation, thereby enhancing the efficiency of the multi-type air conditioner.

In addition, the mode conversion unit 30 includes at least one temperature sensor to measure the temperature of the refrigerant passing through the subcooling unit 33. The temperature sensor may include a first temperature sensor 35, which is configured to measure the temperature of the refrigerant introduced into a certain subcooling unit 33 corresponding to the upmost stream of the subcooling refrigerant pipe P12 among the subcooling units 33, and a second temperature sensor 36 to measure the temperature of the refrigerant introduced into a certain subcooling unit 33 corresponding to the downmost stream of the subcooling refrigerant pipe P12 among the subcooling units 33. Accordingly, it is checked whether the refrigerant is in a mixed state of gas and liquid, or in a state of pure gas by measuring the temperature of the refrigerant passing through the subcooling refrigerant pipe P12 through the first temperature sensor 35 and the second temperature sensor 36. Thereafter, an opening degree of the subcooling expansion valve 34 is adjusted such that the refrigerant in a state of liquid is prevented from being introduced into the compressors 11A and 11B.

Accordingly, the refrigerant passing through the subcooling unit 33 is prevented from failing to be overheated to a gas state, and a subcooling degree (temperature) suitable for each indoor unit 20 is ensured. In other words, a refrigerant having passed through the subcooling refrigerant pipe P12 and having been heated by a refrigerant passing through at least one first branch refrigerant pipe P10, is suitably heated to a gas state. Therefore, when the subcooling refrigerant pipe P12 joins the second refrigerant pipe P2 after passing through the subcooling unit 33, the refrigerant introduced to the compressors 11A and 11B is in a state of pure gas and does not contain liquid.

Likewise, a refrigerant having passed through the first branch refrigerant pipe P10 and having been subcooled by a refrigerant passing through the subcooling refrigerant pipe P12, is suitably subcooled to a liquid state when it is introduced to the indoor expansion valve 22 of the indoor unit 20. Furthermore, refrigerant passing through the indoor heat exchanger 21 is delivered to the compressors 11A and 11B in a state of pure gas, via the second refrigerant pipe P2 and the cooling refrigerant pipes P8.

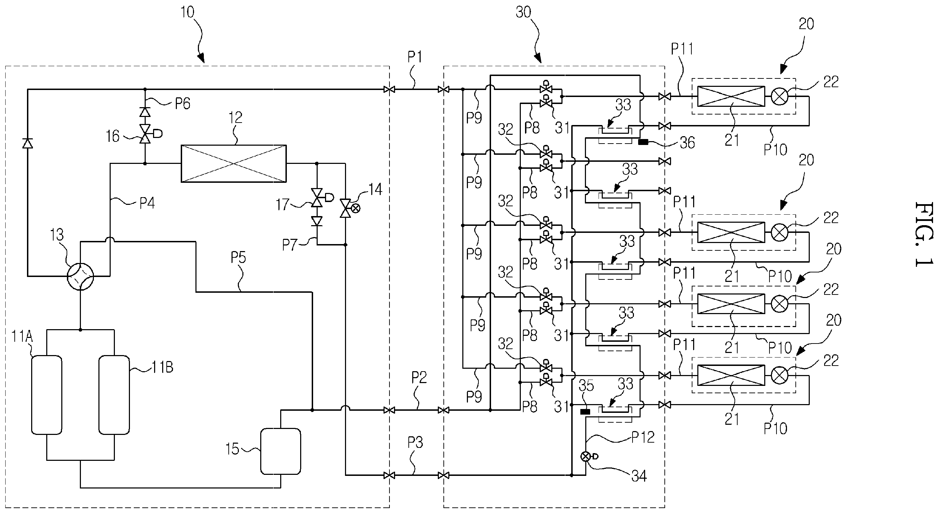

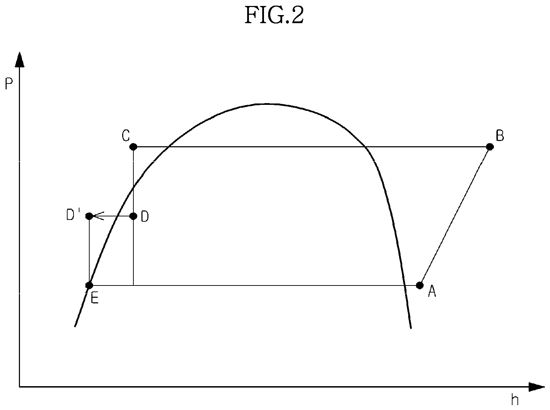

Hereinafter, the operation of a multi-type air conditioner according to the present invention will be described with reference to FIGS. 1 and 2.

First, when a refrigerant is compressed by the compressors 11A and 11B, the pressure and the enthalpy of the refrigerant are gradually increased (A→B). A part of the refrigerant of high temperature discharged from the compressors 11A and 11B to the fourth refrigerant pipe P4 is delivered to some of the indoor heat exchangers 21 through the heating bypass refrigerant pipe P6 such that some indoor units 20 corresponding to the indoor heat exchangers 21 perform a heating operation. The refrigerant is cooled while exchanging heat with the indoor air of the indoor heat exchanger, in which the heating operation is being proceeded, and thus the enthalpy of the refrigerant is decreased (B→C). The refrigerant cooled at the indoor heat exchanger 21 is decompressed by the indoor expansion valve 22. In this case, if the subcooling degree of the refrigerant is small or the degree of decompression of the refrigerant is large, the refrigerant is in a mixed state of liquid and gas (C→D).

Meanwhile, most of the refrigerant discharged from the compressors 11A and 11B is delivered to the outdoor heat exchanger through the fourth refrigerant pipe P4, and then is cooled by passing through the outdoor heat exchanger 12. The cooled refrigerant is delivered to the indoor heat exchanger 21 in a cooling operation through the third refrigerant pipe P3 and the first branch refrigerant pipe P10, and is used to cool an interior space corresponding to the indoor heat exchanger 21.

A part of the refrigerant having passed through the third refrigerant pipe P3 passes through the subcooling unit 33 along the subcooling refrigerant pipe P12. At this time, a refrigerant in a mixed state of liquid and gas (D) is cooled by the refrigerant passing through the subcooling unit 33 along the subcooling refrigerant pipe P12, and then is turned into a state of liquid (D→D'). The refrigerant in the state of liquid is delivered to the indoor unit 20 in a cooling operation through the first branch refrigerant pipe P10 that is connected to the indoor unit 20, and is used for the cooling operation.

The subcooling refrigerant pipe P12 is configured to pass through all of the plurality of subcooling units 33.

Although the temperature sensor includes the first temperature sensor 35 and the second temperature sensor 36, the present disclosure is not limited thereto. According to another embodiment of the present disclosure, the multi-type air conditioner includes only one temperature sensor used to measure the temperature of a refrigerant discharged from a certain subcooling unit 33 corresponding to the downmost stream of the subcooling refrigerant pipe P12 among the subcooling units 33. The temperature of the refrigerant finally discharged after passing through all of the subcooling units 33 is measured, and the opening degree of the subcooling expansion valve is adjusted based on the measured temperature. Alternatively, a temperature sensor may be disposed in each of the subcooling units 33, and a temperature may be obtained from each of the subcooling units 33, the upmost and downmost subcooling units 33 in which the indoor units operate, or only from the downmost subcooling unit 33 in which the indoor unit operates.

Although a few example embodiments of the present invention have been shown and described, it would be appreciated by those skilled in the art that changes may be made in these embodiments without departing from the invention, the scope of which is defined in the claims.

## Claims

1. A multi-type air conditioner comprising:
an outdoor unit (10) disposed at an exterior space and comprising a compressor (11A, 11B) to compress a refrigerant, an outdoor heat exchanger (12) to exchange heat with outdoor air, and an outdoor heat expansion valve (14) configured to expand a refrigerant under decompression before the refrigerant is introduced into the outdoor heat exchanger (12) during a heating operation;
a plurality of indoor units (20) disposed at interior spaces and each comprising an indoor heat exchanger (21) configured to exchange heat with indoor air and an indoor expansion valve (22) configured to expand a refrigerant under decompression before the refrigerant is introduced into the indoor heat exchanger (21) during a cooling operation; and
a mode conversion unit (30) connected to the outdoor unit (10) and the plurality of indoor units (20) through refrigerant pipes used to circulate the refrigerant between the outdoor unit (10) and the plurality of indoor units (20),
wherein the refrigerant pipes comprise:
a first refrigerant pipe (Pi) configured to deliver a refrigerant of high temperature discharged from the compressor (11A, 11B) to the indoor heat exchangers during a cooling operation;
a second refrigerant pipe (P2) configured to guide a refrigerant, which has absorbed heat at the indoor heat exchanger (21), to the compressor (11A, 11B) during a cooling operation; and
a third refrigerant pipe (P3) configured to guide a refrigerant, which has emitted heat in at least one of the outdoor heat exchanger (12) and the indoor heat exchangers (21), to another one of the outdoor heat exchanger (12) and the indoor heat exchangers (21),
a four-way valve (13) configured to selectively guide a refrigerant, which has been discharged from the compressor (11A, 11B), to one of the outdoor heat exchanger (12) and the plurality of indoor units (20);
a fourth refrigerant pipe (P4) connecting the four-way valve (13) to the outdoor heat exchanger (12);
a heating bypass refrigerant pipe (P6) connecting the first refrigerant pipe (P1) to the fourth refrigerant pipe (P4);
a heating bypass valve (16) configured to selectively open and close the heating bypass refrigerant pipe (P6); and
a plurality of first branch refrigerant pipes (P10) connected to the third refrigerant pipe (P3), to distribute the refrigerant, which is delivered through the third refrigerant pipe (P3), into the plurality of indoor heat exchangers (21) during the cooling operation; and
wherein the mode conversion (30) unit comprises:
a plurality of subcooling units (33), configured to subcool a refrigerant before the refrigerant is introduced to the plurality of indoor units (20) during a cooling operation;
a subcooling refrigerant pipe (P12) sequentially passing through the plurality of subcooling units (33) to subcool each refrigerant introduced into the indoor units (20), wherein the subcooling refrigerant pipe (P12) branches from the third refrigerant pipe (P3) and sequentially passes through the plurality of subcooling units (33) and joins the second refrigerant pipe (P2); and
a subcooling expansion valve (34) disposed on the subcooling refrigerant pipe (P12) to expand a refrigerant before the refrigerant is introduced into the plurality of subcooling units (33),
wherein the plurality of subcooling units (33) are configured to allow a refrigerant, which passes through the first branch refrigerant pipe (P10), to exchange heat with a refrigerant, which passes through the subcooling refrigerant pipe (P12).

2. The multi-type air conditioner of claim 1, wherein the mode conversion unit (30) further comprises:
a cooling valve (31), configured to allow a refrigerant having passed through the indoor heat exchanger (21) to be delivered to the second refrigerant pipe (P2), during a cooling operation; and
a heating valve (32), configured to allow a refrigerant having passed through the first refrigerant pipe (P1) to be delivered to the indoor heat exchanger (21), during a heating operation.

3. A method of controlling refrigerant circulation during a cooling operation in the multi-type air conditioner of any one of preceding claims, the method comprising:
receiving, by the mode-conversion unit (30) from the external unit (10) via a third refrigerant pipe (P3), a refrigerant in a mixed state of liquid and gas during the cooling operation;
expanding the refrigerant under decompression, by a subcooling expansion valve (34) disposed on a subcooling refrigerant pipe (P12) connected to the third refrigerant pipe (P3);
subcooling refrigerant passing through a first branch pipe among a plurality of first branch pipes (P10) connecting the third refrigerant pipe (P3) to the plurality of internal units (10), to a state of liquid, via a heat exchange with the subcooling refrigerant pipe (P12); and
heating refrigerant passing through the subcooling refrigerant pipe (P12), via a heat exchange with the first branch pipe among the plurality of first branch pipes (P10),
wherein the expanding is performed before the subcooled refrigerant is introduced to the plurality of internal units (10).

4. The method of claim 3, further comprising:
measuring a temperature of the refrigerant passing through the subcooling refrigerant pipe (P12) using at least one sensor and determining a physical state of the refrigerant passing through the subcooling refrigerant pipe (P12).

5. The method of claim 4, wherein the at least one sensor includes a first sensor (35) to measure a temperature of refrigerant corresponding to an uppermost stream of the subcooling refrigerant pipe (P12), and a second sensor (36) to measure a temperature of refrigerant corresponding to a downmost stream of the subcooling refrigerant pipe (P12),
wherein the downmost stream of the subcooling refrigerant pipe (P12) is further from the subcooling expansion valve than the uppermost stream of the subcooling refrigerant pipe (P12).

6. The method of claim 5, further comprising:
adjusting an opening degree of the subcooling expansion valve (34) based on the determined state of the refrigerant using at least one of the measurements from the first sensor (35) and second sensor (36), to prevent refrigerant in a state of liquid from being introduced to a compressor (11A, 11B) disposed in the external unit (10) via a refrigerant pipe connecting the mode-conversion unit (30) to the external unit (10).

## Patentansprüche

1. Multityp-Klimaanlage, die Folgendes aufweist:
eine Außenbereichseinheit (10), die an einem Außenbereich angeordnet ist und einen Kompressor (11A, 11B), der ein Kältemittel verdichtet, einen Außenbereichswärmetauscher (12) für den Wärmeaustausch mit Außenbereichsluft und ein Außenbereichswärme-Expansionsventil (14), das zum Entspannen eines Kältemittels unter Druckentlastung, bevor das Kältemittel während eines Heizbetriebs in den Außenbereichswärmetauscher (12) eingeführt wird, gestaltet ist, aufweist;
mehrere Innenbereichseinheiten (20), die an Innenbereichen angeordnet sind und jeweils einen Innenbereichswärmetauscher (21), der für den Wärmeaustausch mit Innenbereichsluft gestaltet ist, und ein Innenbereichs-Expansionsventil (22) aufweist, das zum Entspannen eines Kältemittels unter Druckentlastung, bevor das Kältemittel während eines Kühlbetriebs in den Innenbereichswärmetauscher (21) eingeführt wird, konfiguriert ist; und
eine Modusumwandlungseinheit (30), die mit der Außenbereichseinheit (10) und den mehreren Innenbereichseinheiten (20) durch Kältemittelleitungen, die zum Umwälzen des Kältemittels zwischen der Außenbereichseinheit (10) und den mehreren Innenbereichseinheiten (20) verwendet werden, verbunden ist,
wobei die Kältemittelleitungen Folgendes aufweisen:
eine erste Kältemittelleitung (P1), die zum Transportieren eines aus dem Kompressor (11A, 11B) ausgelassenen Kältemittels hoher Temperatur während eines Kühlbetriebs zu den Innenbereichswärmetauschern gestaltet ist;
eine zweite Kältemittelleitung (P2), die zum Führen eines Kältemittels, das am Innenbereichswärmetauscher (21) Wärme aufgenommen hat, während eines Kühlbetriebs zum Kompressor (11A, 11B) gestaltet ist; und
eine dritte Kältemittelleitung (P3), die zum Führen eines Kältemittels, das Wärme in wenigstens einem von dem Außenbereichswärmetauscher (12) und den Innenbereichswärmetauschern (21) abgegeben hat, zu einem anderen von dem Außenbereichswärmetauscher (12) und den Innenbereichswärmetauschern (21) gestaltet ist,
ein Vierwegeventil (13), das zum selektiven Führen eines Kältemittels, das aus dem Kompressor (11A, 11B) ausgegeben wurde, zu einem von dem Außenbereichswärmetauscher (12) und den mehreren Innenbereichseinheiten (20) gestaltet ist;
eine vierte Kältemittelleitung (P4), die das Vierwegeventil (13) mit dem Außenbereichswärmetauscher (12) verbindet;
eine Heizungsumgehungskältemittelleitung (P6), die die erste Kältemittelleitung (P1) mit der vierten Kältemittelleitung (P4) verbindet;
ein Heizungsumgehungsventil (16), das zum selektiven Öffnen und Schließen der Heizungsumgehungskältemittelleitung (P6) gestaltet ist; und
mehrere erste Kältemittelzweigleitungen (P10), die mit der dritten Kältemittelleitung (P3) verbunden sind, zum Verteilen des Kältemittels, das durch die dritte Kältemittelleitung (P3) transportiert wird, während des Kühlbetriebs in die mehreren Innenbereichswärmetauscher (21) ; und
wobei die Modusumwandlungseinheit (30) Folgendes aufweist:
mehrere Unterkühlungseinheiten (33), die zum Unterkühlen eines Kältemittels, bevor das Kältemittel während eines Kühlbetriebs in die mehreren Innenbereichseinheiten (20) eingeführt wird, gestaltet sind;
eine Unterkühlungskältemittelleitung (P12), die nacheinander durch die mehreren Unterkühlungseinheiten (33) verläuft, um jedes in die Innenbereichseinheiten (20) eingeführte Kältemittel zu unterkühlen, wobei die Unterkühlungskältemittelleitung (P12) von der dritten Kältemittelleitung (P3) abzweigt und nacheinander durch die mehreren Unterkühlungseinheiten (33) verläuft und an die zweite Kältemittelleitung (P2) angeschlossen ist; und
ein Unterkühlungsexpansionsventil (34), das an der Unterkühlungskältemittelleitung (P12) angeordnet ist, um ein Kältemittel zu entspannen, bevor das Kältemittel in die mehreren Unterkühlungseinheiten (33) eingeführt wird,
wobei die mehreren Unterkühlungseinheiten (33) gestaltet sind, um den Wärmeaustausch eines Kältemittels, das die erste Kältemittelzweigleitung (P10) durchströmt, mit einem Kältemittel, das die Unterkühlungskältemittelleitung (P12) durchströmt, zuzulassen.

2. Multityp-Klimaanlage nach Anspruch 1, wobei die Modusumwandlungseinheit (30) ferner Folgendes aufweist:
ein Kühlungsventil (31), das gestaltet ist, um zuzulassen, dass ein Kältemittel, das den Innenbereichswärmetauscher (21) durchlaufen hat, während eines Kühlbetriebs zur zweiten Kältemittelleitung (P2) transportiert wird; und
ein Heizungsventil (32), das gestaltet ist, um zuzulassen, dass ein Kältemittel, das die erste Kältemittelleitung (P1) durchlaufen hat, während eines Heizbetriebs zum Innenbereichswärmetauscher (21) transportiert wird.

3. Verfahren zum Regeln der Kältemittelumwälzung während eines Kühlbetriebs in der Multityp-Klimaanlage nach einem der vorhergehenden Ansprüche, wobei das Verfahren Folgendes aufweist:
durch die Modusumwandlungseinheit (30) Erhalten eines Kältemittels in einem gemischten Zustand aus Flüssigkeit und Gas über eine dritte Kältemittelleitung (P3) aus der Außeneinheit (10) während des Kühlbetriebs;
Entspannen des Kältemittels unter Druckentlastung durch ein Unterkühlungsexpansionsventil (34), das an einer Unterkühlungskältemittelleitung (P12) angeordnet ist, die mit der dritten Kältemittelleitung (P3) verbunden ist;
Unterkühlen von Kältemittel, das eine erste Zweigleitung unter mehreren ersten Zweigleitungen (P10), die die dritte Kältemittelleitung (P3) mit den mehreren Inneneinheiten (10) verbinden, durchläuft, zu einem Flüssigkeitszustand über einen Wärmeaustausch mit der Unterkühlungskältemittelleitung (P12); und
Erhitzen von die Unterkühlungskältemittelleitung (P12) durchlaufendem Kältemittel über einen Wärmeaustausch mit der ersten Zweigleitung unter den mehreren ersten Zweigleitungen (P10),
wobei das Entspannen durchgeführt wird, bevor das unterkühlte Kältemittel in die mehreren Inneneinheiten (10) eingeführt wird.

4. Verfahren nach Anspruch 3, das ferner Folgendes aufweist:
Messen einer Temperatur des Kältemittels, das die Unterkühlungskältemittelleitung (P12) durchströmt, unter Verwendung wenigstens eines Sensors und Bestimmen eines physikalischen Zustands des die Unterkühlungskältemittelleitung (P12) durchströmenden Kältemittels.

5. Verfahren nach Anspruch 4, wobei der wenigstens eine Sensor einen ersten Sensor (35) zum Messen einer Kältemitteltemperatur, die einem obersten Strom der Unterkühlungskältemittelleitung (P12) entspricht, und einen zweiten Sensor (36) zum Messen einer Kältemitteltemperatur, die einem untersten Strom der Unterkühlungskältemittelleitung (P12) entspricht, umfasst, wobei der unterste Strom der Unterkühlungskältemittelleitung (P12) weiter vom Unterkühlungsexpansionsventil entfernt ist als der oberste Strom der Unterkühlungskältemittelleitung (P12).

6. Verfahren nach Anspruch 5, das ferner Folgendes aufweist:
Einstellen eines Öffnungsgrads des Unterkühlungsexpansionsventils (34) auf Basis des bestimmten Zustands des Kältemittels unter Verwendung von wenigstens einer der Messungen vom ersten Sensor (35) und zweiten Sensor (36), um zu verhindern, dass Kältemittel in einem Flüssigkeitszustand über eine Kältemittelleitung, die die Modusumwandlungseinheit (30) mit der Außeneinheit (10) verbindet, in einen Kompressor (11A, 11b), der in der Außeneinheit (10) angeordnet ist, eingeführt wird.

## Revendications

1. Climatiseur à plusieurs types comportant :
une unité d'extérieur (10) disposée au niveau d'un espace extérieur et comportant un compresseur (11A, 11B) pour comprimer un fluide frigorigène, un échangeur de chaleur d'extérieur (12) servant à échanger de la chaleur avec de l'air d'extérieur, et une vanne de détente de chaleur d'extérieur (14) configurée à des fins de détente d'un fluide frigorigène sous décompression avant que le fluide frigorigène ne soit introduit dans l'échangeur de chaleur d'extérieur (12) au cours d'une opération de chauffage ;
une pluralité d'unités d'intérieur (20) disposées au niveau d'espaces intérieurs et chacune comportant un échangeur de chaleur d'intérieur (21) configuré pour échanger de la chaleur avec de l'air d'intérieur et une vanne de détente d'intérieur (22) configurée à des fins de détente d'un fluide frigorigène sous décompression avant que le fluide frigorigène ne soit introduit dans l'échangeur de chaleur d'intérieur (21) au cours d'une opération de refroidissement ; et
une unité de conversion de mode (30) raccordée à l'unité d'extérieur (10) et à la pluralité d'unités d'intérieur (20) par le biais de tuyaux de fluide frigorigène utilisés pour faire circuler le fluide frigorigène entre l'unité d'extérieur (10) et la pluralité d'unités d'intérieur (20),
dans lequel les tuyaux de fluide frigorigène comportent :
un premier tuyau de fluide frigorigène (P1) configuré pour acheminer un fluide frigorigène de haute température déchargé en provenance du compresseur (11A, 11B) jusqu'aux échangeurs de chaleur d'intérieur au cours d'une opération de refroidissement ;
un deuxième tuyau de fluide frigorigène (P2) configuré pour guider un fluide frigorigène, qui a absorbé de la chaleur au niveau de l'échangeur de chaleur d'intérieur (21), jusqu'au compresseur (11A, 11B) au cours d'une opération de refroidissement ; et
un troisième tuyau de fluide frigorigène (P3) configuré pour guider un fluide frigorigène, qui a émis de la chaleur dans au moins l'un parmi l'échangeur de chaleur d'extérieur (12) et les échangeurs de chaleur d'intérieur (21), jusqu'à un autre parmi l'échangeur de chaleur d'extérieur (12) et les échangeurs de chaleur d'intérieur (21),
une vanne à quatre voies (13) configurée pour guider de manière sélective un fluide frigorigène, qui a été déchargé en provenance du compresseur (11A, 11B), jusqu'à l'un parmi l'échangeur de chaleur d'extérieur (12) et la pluralité d'unités d'intérieur (20) ;
un quatrième tuyau de fluide frigorigène (P4) raccordant la vanne à quatre voies (13) à l'échangeur de chaleur d'extérieur (12) ;
un tuyau de dérivation de fluide frigorigène de chauffage (P6) raccordant le premier tuyau de fluide frigorigène (P1) au quatrième tuyau de fluide frigorigène (P4) ;
une vanne de dérivation de chauffage (16) configurée pour ouvrir et fermer de manière sélective le tuyau de dérivation de fluide frigorigène de chauffage (P6) ; et
une pluralité de premiers tuyaux d'embranchement de fluide frigorigène (P10) raccordés au troisième tuyau de fluide frigorigène (P3), servant à distribuer le fluide frigorigène, qui est acheminé par le biais du troisième tuyau de fluide frigorigène (P3), jusque dans la pluralité d'échangeurs de chaleur d'intérieur (21) au cours de l'opération de refroidissement ; et
dans lequel l'unité de conversion de mode (30) comporte :
une pluralité d'unités de sous-refroidissement (33), configurées pour sous-refroidir un fluide frigorigène avant que le fluide frigorigène ne soit introduit dans la pluralité d'unités d'intérieur (20) au cours d'une opération de refroidissement ;
un tuyau de fluide frigorigène de sous-refroidissement (P12) passant de manière séquentielle au travers de la pluralité d'unités de sous-refroidissement (33) pour sous-refroidir chaque fluide frigorigène introduit dans les unités d'intérieur (20), dans lequel le tuyau de fluide frigorigène de sous-refroidissement (P12) s'embranche depuis le troisième tuyau de fluide frigorigène (P3) et passe de manière séquentielle au travers de la pluralité d'unités de sous-refroidissement (33) et s'assemble au deuxième tuyau de fluide frigorigène (P2) ; et
une vanne de détente de sous-refroidissement (34) disposée sur le tuyau de fluide frigorigène de sous-refroidissement (P12) à des fins de détente d'un fluide frigorigène avant que le fluide frigorigène ne soit introduit dans la pluralité d'unités de sous-refroidissement (33),
dans lequel les unités de sous-refroidissement de la pluralité d'unités de sous-refroidissement (33) sont configurées pour permettre à un fluide frigorigène, qui passe au travers du premier tuyau d'embranchement de fluide frigorigène (P10), d'échanger de la chaleur avec un fluide frigorigène, qui passe au travers du tuyau de fluide frigorigène de sous-refroidissement (P12).

2. Climatiseur à plusieurs types selon la revendication 1, dans lequel l'unité de conversion de mode (30) comporte par ailleurs :
une vanne de refroidissement (31), configurée pour permettre à un fluide frigorigène ayant passé au travers de l'échangeur de chaleur d'intérieur (21) d'être acheminé jusque dans le deuxième tuyau de fluide frigorigène (P2), au cours d'une opération de refroidissement ; et
une vanne de chauffage (32), configurée pour permettre à un fluide frigorigène ayant passé au travers du premier tuyau de fluide frigorigène (P1) d'être acheminé jusque dans l'échangeur de chaleur d'intérieur (21), au cours d'une opération de chauffage.

3. Procédé de commande de circulation de fluide frigorigène au cours d'une opération de refroidissement dans le climatiseur à plusieurs types selon l'une quelconque des revendications précédentes, le procédé comportant les étapes consistant à :
recevoir, par l'unité de conversion de mode (30) en provenance de l'unité externe (10) par le biais d'un troisième tuyau de fluide frigorigène (P3), un fluide frigorigène dans un état mélangé de liquide et de gaz au cours de l'opération de refroidissement ;
détendre le fluide frigorigène sous décompression, par une vanne de détente de sous-refroidissement (34) disposée sur un tuyau de fluide frigorigène de sous-refroidissement (P12) raccordé au troisième tuyau de fluide frigorigène (P₃) ;
sous-refroidir le fluide frigorigène passant au travers d'un premier tuyau d'embranchement parmi une pluralité de premiers tuyaux d'embranchement (P10) raccordant le troisième tuyau de fluide frigorigène (P3) à la pluralité d'unités internes (10), jusque dans un état de liquide, par le biais d'un échange de chaleur avec le tuyau de fluide frigorigène de sous-refroidissement (P12) ; et
chauffer le fluide frigorigène passant au travers du tuyau de fluide frigorigène de sous-refroidissement (P12), par le biais d'un échange de chaleur avec le premier tuyau d'embranchement parmi la pluralité de premiers tuyaux d'embranchement (P10),
dans lequel la détente est effectuée avant que le fluide frigorigène sous-refroidi ne soit introduit dans la pluralité d'unités internes (10).

4. Procédé selon la revendication 3, comportant par ailleurs :
l'étape consistant à mesurer une température du fluide frigorigène passant au travers du tuyau de fluide frigorigène de sous-refroidissement (P12) en utilisant au moins un capteur et l'étape consistant à déterminer un état physique du fluide frigorigène passant au travers du tuyau de fluide frigorigène de sous-refroidissement (P12).

5. Procédé selon la revendication 4, dans lequel ledit au moins un capteur comprend un premier capteur (35) servant à mesurer une température du fluide frigorigène qui correspond à un flux le plus en amont du tuyau de fluide frigorigène de sous-refroidissement (P12), et un deuxième capteur (36) servant à mesurer une température du fluide frigorigène qui correspond à un flux le plus en aval du tuyau de fluide frigorigène de sous-refroidissement (P12),
dans lequel le flux le plus en aval du tuyau de fluide frigorigène de sous-refroidissement (P12) est plus éloigné de la vanne de détente de sous-refroidissement par rapport au flux le plus en amont du tuyau de fluide frigorigène de sous-refroidissement (P12).

6. Procédé selon la revendication 5, comportant par ailleurs :
l'étape consistant à ajuster un degré d'ouverture de la vanne de détente de sous-refroidissement (34) en se basant sur l'état déterminé du fluide frigorigène en utilisant au moins l'une des mesures en provenance du premier capteur (35) et du deuxième capteur (36), pour empêcher le fluide frigorigène dans un état de liquide d'être introduit dans un compresseur (11A, 11B) disposé dans l'unité externe (10) par le biais d'un tuyau de fluide frigorigène raccordant l'unité de conversion de mode (30) à l'unité externe (10).
